# EUROPÄISCHE PATENTSCHRIFT

(11) **EP 0 697 128 B1**
(45) Veröffentlichungstag und Bekanntmachung des Hinweises auf die Patenterteilung: **06.08.1997**
(21) Anmeldenummer: 94913494.4
(22) Anmeldetag: 04.05.1994
(51) Int. Cl.: G21C 3/06

(54) **BRENNSTAB MIT VORBESTIMMTER BEWIRKTER PERFORATION**
FUEL ROD WITH PREDETERMINED ANTICIPATED PERFORATION
CRAYON COMBUSTIBLE A PERFORATION ANTICIPEE PREDEFINIE

(30) Priorität: 04.05.1993 DE 4314708
(43) Veröffentlichungstag der Anmeldung: 21.02.1996
(73) Patentinhaber: SIEMENS AKTIENGESELLSCHAFT, 80333 München (DE)
(72) Erfinder: STEINBERG, Eckard, D-91056 Erlangen (DE); SCHAA, Alwin, D-47199 Duisburg (DE)
(86) Internationale Anmeldenummer: DE9400503
(87) Internationale Veröffentlichungsnummer: WO9425964

(56) Entgegenhaltungen:
- EP-A- 0 170 943
- DE-U- 9 206 038
- US-A- 4 372 817
- PATENT ABSTRACTS OF JAPAN, vol. 3, no. 122 (M-76) 13. Oktober 1979 & JP-A-54 099 897

## Beschreibung

Die Erfindung betrifft einen Brennstab für ein Siedewasser-Brennelement mit einem verschlossenen Hüllrohr, das einen kühlmittel freien Innenraum, der mindestens oxidierbaren Kernbrennstoff enthält, und eine Hüllrohrwand aufweist, deren Innenfläche aus einem metallurgisch aufgebrachten Metall (z. B. einer Zr-Fe-Legierung) besteht, das beim Reaktorbetrieb gegenüber den Bedingungen im Innenraum möglichst korrosionsbeständig ist und sich auch in Anwesenheit von gasförmigem Wasserstoff möglichst nicht verändert. Zumindest die Hüllrohr-Außenfläche besteht aus einem beim Reaktorbetrieb gegenüber den Bedingungen im Siedewasser möglichst korrosionsbeständigen Metall (z. B. Zircaloy).

Allgemein betrifft die Erfindung ein Kernreaktor-Brennelement, das beim Betrieb des Kernreaktors durch ein Kühlmittel gekühlt wird, entsprechend dem Oberbegriff des Anspruchs 3. Der Brennstab enthält ein verschlossenes Hüllrohr, dessen Innenraum mindestens den Kernbrennstoff, in der Regel nach der Fertigstellung auch eine Inertgasfüllung (zum Beispiel Helium), umschließt, um im neuen Brennstab bereits einen gewissen Innendruck zur teilweisen Kompensation des im Kühlmittel herrschenden Außendrucks zu erzeugen. Meistens besteht der Brennstoff überwiegend aus noch oxidationsfähigem Material (zum Beispiel Uranoxid UO₂ oder U₂O₃) und setzt während des Reaktorbetriebes Stickstoff, Jod und andere Spaltprodukte frei, wodurch sich Zusammensetzung und Druck der Hüllrohrfüllung verändert.

Die Hüllrohre der Brennstäbe sind auf die normalen Betriebsbedingungen des Reaktors, also zum Beispiel mechanische, thermische und chemische Belastung, so ausgelegt, daß sie eine möglichst lange Standzeit im Reaktor unter normalen Betriebsbedingungen möglichst ohne Schaden überstehen.

Während des Betriebes auftretende, kleinere Schaden können dabei häufig toleriert werden und führen höchstens dazu, daß die Brennstäbe bei der nächsten Inspektion ersetzt werden. Hüllrohre, die nur eine geringe Anfälligkeit für solche geringfügigen Schäden zeigen, erlauben auch große Intervallen zwischen solchen Wartungsarbeiten.

Es können aber auch schwerer wiegende Schäden auftreten, die eine sofortige Abschaltung des Reaktors erfordern. Kennt man die Ursachen solcher Schäden, so wird man versuchen, bereits die Ursachen zu bekämpfen. Man kann aber, falls die Ursache nur ein kleiner Primärschaden ist, der selbst an sich noch keinen tiefgreifenden Eingriff in den Reaktorbetrieb erfordert, durch Zusatzmaßnahmen - zumal solche Primärschäden kaum vollständig ausgeschaltet werden können - das mögliche Ausmaß des Sekundärschadens begrenzen.

Ähnliche Sicherheitsmaßnahmen sind gebräuchlich. So ist zum Beispiel diskutiert worden, für den Fall eines Druckabfalls im Kühlmittel, der bei einem Primärschaden in anderen Teilen des Reaktors entstehen kann, ein Aufblähen der unter erheblichem Innendruck stehenden Hüllrohre zu vermeiden, indem im Hüllrohr eine Sollbruchstelle oder ein automatisches Sicherheitsventil vorgesehen ist, das bei Überschreiten eines vorgegebenen Druckunterschieds zwischen innen und außen öffnet und einen Druckausgleich hervorruft. Aufgeblähte Hüllrohre würden nämlich die bei einem derartigen Primärschaden erforderliche Notkühlung stören, so daß schwerwiegende Folgeschäden auftreten könnten.

Mit der Erfindung wird sozusagen ein ähnliches "automatisches Wasserstoff-Sicherheitsventil" geschaffen, das im Normalbetrieb oder sogar noch im Fall eines geringfügigen, aber unvermeidlichen Primärschadens, durch das Kühlmittel in das Innere des Brennstabs eintritt, geschlossen ist und die Funktionsfähigkeit des Brennstabs nicht beeinträchtigt, aber selbsttätig öffnet, sobald die Konzentration von Wasserstoff (genauer: der Partialdruck p(H₂) des Wasserstoffs) einen kritischen Wert erreichen sollte, bei dem die Zerstörung des ganzen Hüllrohrs droht.

Für die Bedingungen leichtwassergekühlter Kernreaktoren wurden als Material für Hüllrohre besondere Zirkoniumlegierungen (insbesondere Zircaloy 2 und Zircaloy 4) entwickelt. Dabei haben sich für Siedewasserreaktoren Hüllrohre aus Zircaloy 2 bewährt, an deren Innenfläche eine Innenauskleidung ("Liner") aus technisch reinem Zirkonium metallurgisch gebunden ist (US-A-4,372,817 und US-A-4,200,492). Für die Außenfläche, die von der dicken Matrix des Hüllrohrs gebildet wird, wird Zircaloy 2 als hinreichend resistent gegen die Korrosion durch das Kühlmittel (Korrosion von außen) angesehen. Auf der Innenseite jedoch bildet der Liner eine Barriere für Spaltprodukte, die im Inneren des Hüllrohrs entstehen können und das Zircaloy, das die Trägerschicht (Matrix) einschließlich der Außenfläche des Hüllrohres bildet, angreifen können.

Der Liner ist auch chemisch unempfindlich gegen Kontakt mit dem Brennstoff selbst, der in der Regel eine poröse Struktur besitzt und im Lauf des Reaktorbetriebes zu einer erheblichen Volumenzunahme neigt, wobei insbesondere Brennstofftabletten ("Pellets") durch diese Volumenänderung und dabei auftretende innere Spannungen rissig werden. Daher können Bruchstücke der Pellets die Hüllrohr-Innenfläche kontaktieren und dort zu Spannungen führen, die im duktilen Zirkonium-Liner ausgeglichen werden, bei liner-losen Hüllrohren aber die gefürchtete Spannungsriß-Korrosion, die zu langen Rissen und Aufplatzungen des Hüllrohres führt, auslösen können. Unter "Korrosion" wird dabei nicht nur Oxidation (Umsetzung mit Sauerstoff), sondern auch Erosion und andere chemische Zerstörungen verstanden, die an der Hüllrohr-Innenwand auftreten. Allerdings korrodiert Zirkonium leichter in Wasser und Wasserdampf - falls diese durch einen Primärschaden eindringen - als Zircaloy. Im Hinblick darauf und auf eine langsamere Aufnahme von Wasserstoff und verzögerte Bildung von Hydrid sind daher schwachdotierte Zirkoniumlegierungen, insbesondere eine Zr-Fe-Legierung, als Material für Liner entwickelt worden (DE-U-92 06 038.2).

Für Druckwasserreaktoren werden wegen der etwas unterschiedlichen chemischen und physikalischen Korrosionsbedingungen im Kühlwasser und wegen der höheren Oberflächentemperaturen häufig umgekehrt Hüllrohre verwendet, deren Matrix aus Zircaloy 4 besteht, die Innenfläche bildet und als ausreichend resistent gegen die korrosiven Vorgänge und Belastungen an der Hüllrohr-Innenfläche angesehen wird, während die Außenfläche durch eine dünne, metallurgisch aufgebrachte Außenschicht gegen die Korrosionsbedingungen im Kühlmittel, insbesondere eine vor allem bei Strahlenbelastung auftretende, verstärkte uniforme Korrosion, geschützt wird (sogenannte "Duplex"-Hüllrohre).

Im folgenden werden in erster Linie Brennstäbe von Siedewasserreaktoren betrachtet; jedoch sind die dabei entwickelten Grundsätze und technischen Maßnahmen weitgehend auch auf Druckwasserreaktoren übertragbar. Die Erfindung ist daher nicht auf die im einzelnen für Siedewasser-Brennstäbe beschriebenen Maßnahmen beschränkt.

Der Erfindung liegt die Aufgabe zugrunde, die Hüllrohre von leichtwassergekühlten Kernreaktoren zumindest vor größeren Zerstörungen, wie ausgedehnten Löchern oder Rissen, zu schützen. Insbesondere soll die Folge von kleinflächigen Primärschaden, die zu geringfügigen Löchern im Hüllrohr führen, begrenzt werden. Dadurch ist es möglich, die Standzeit der Brennstäbe im Hüllrohr auch dann noch zu verlängern und ein sofortiges Auswechseln geschädigter Hüllrohre unnötig zu machen, selbst wenn diese Rohre bereits geringe Primärschäden aufweisen, die zu einem Eindringen von Kühlmittel in das Innere des Hüllrohres geführt haben.

Bei den eingangs erwähnten Hüllrohren mit einer dünnen duktilen Innenschicht ist die Häufigkeit von Primärschäden, die durch Belastungen an der Hüllrohr-Innenfläche entstehen, bereits stark herabgesetzt.

Die Erfahrungen haben gezeigt, daß Hüllrohre auch von außen her geschädigt werden können. Auch diese Primärschäden sind meist sehr kleinflächig; sie haben oft mechanische Ursachen. So können sich scharfkantige Fremdkörper in den Abstandhaltern von Brennelementen verfangen und durch das mit hoher Geschwindigkeit vorbeifließende Kühlmittel in starke Vibrationen versetzt werden. Der Fremdkörper kann dabei die Hüllrohrwand verletzen, bis es zum Durchbruch kommt ("Fretting"-Schaden).

Solche kleinen Schäden werden häufig erst nach längerer Dauer erkannt, da durch sie nur wenig Wasser (Kühlmittel) in das Hüllrohr eindringt bzw. nur wenig radioaktive Stoffe aus dem Hüllrohrinneren in das Kühlmittel gelangen können. Daher ist es unkritisch, wenn die geschädigten Brennstäbe noch eine gewisse Zeit im heißen Kern des Reaktors verbleiben.

Ein Liner aus Reinzirkonium ist gegenüber Korrosion in Wasser und Wasserdampf anfälliger als Zircaloy; werden Primärschäden nicht vollständig ausgeschlossen und tritt daher Wasserdampf in ein solches Hüllrohr, so kann es zu einer stärkeren Korrosion kommen als bei homogenen Hüllrohren aus Zircaloy. Aus diesem Grund wurde schon vorgeschlagen, den Liner aus Zirkonium zu fertigen, dem zur besseren Korrosionsbeständigkeit bis zu 1 Gew.-% Zinn zulegiert ist (EP-A- 0 121 204).

Bei Oxidation durch Wasser oder Wasserdampf entsteht gasförmiger Wasserstoff, der in das Hüllrohr-Material eindringen und dort infolge von Hydrid-Ausscheidungen zu Materialveränderungen und zur Versprödung führen kann. An sich ist die Oxidschicht des Zircaloys eine verhältnismäßig gute Diffusionsbarriere, während Liner aus reinem oder schwach dotiertem Zirkonium trotz einer dickeren Oxidschicht eine schnellere Hydridbildung zeigen. Dagegen ist der eingangs angegebene Liner aus Zirkonium mit 0,2 bis 0,8 Gew.-% Eisen vorteilhaft, da er die hohe Duktilität des Zirkonium-Liners mit der hohen Korrosionsbeständigkeit des Zircaloys und einer noch schwächeren Hydridbildung verbindet.

Dadurch wird bereits die Zahl Primärschaden, soweit sie durch Spannungsrißkorrosion verursach sind, erheblich herabgesetzt und gleichzeitig die Gefahr von Sekundärschäden vermindert.

Derartige Sekundärschäden sind verhältnismäßig selten, können aber viel schwerwiegender sein. Sie sind ausgedehnte Zerstörungen des Hüllrohrs, bei denen es zu den erwähnten Freisetzungen von radioaktiven Stoffen und Verunreinigungen kommt. Unterdessen sind Risse beobachtet worden, die mehrere Meter Länge aufweisen und sich praktisch über die ganze Länge des Brennstabes ausgedehnt haben. Ein einziger derartiger Riß kann dazu führen, daß der Reaktor zum Auswechseln des Brennstabes abgeschaltet werden muß.

Bei der Fertigung von Hüllrohren ist zunächst wesentlich, daß das Hüllrohr nach Möglichkeit keinerlei Keime enthält, an denen sich unter den physikalischen und chemischen Bedingungen, denen jeweils die Außenfläche und die Innenfläche des Hüllrohres ausgesetzt sind, Löcher bilden können, die durch die ganze Wand des Hüllrohres wachsen könnten.

Die Erfindung sieht aber - speziell bei einem Liner-Hüllrohr der eingangs angegebenen Art - einen Keim vor, der von gasförmigem Wasserstoff im Inneren des Hüllrohres aktivierbar ist und gezielt zur Bildung eines das Hüllrohr durchsetzenden Loches führt.

Allgemein besitzt ein erfindungsgemäßer Brennstab die Merkmale des Anspruchs 1.

Die Außenfläche des Hüllrohres besteht dabei aus einem gegen Korrosion durch das Kühlmittel geschützten Metall und seine Innenfläche aus einem gegen eine von innen ausgehende Zerstörung beständigen Material. Am oder im Hüllrohr ist ein Keim zur Bildung eines das Hüllrohr durchsetzenden Loches angebracht, wobei der Keim von der Außenseite des Hüllrohres durch das Kühlmittel und von der Innenseite des Hüllrohres durch die vom Hüllrohr unter normalen Betriebsbedingungen eingeschlossenen Stoffe nicht aktivierbar ist, aber aktiviert wird, sobald Kühlmittel in das Innere des Hüllrohres eingetreten ist.

Die unterdessen vorliegenden Untersuchungen an großflächig geschädigten Hüllrohren sowie Versuche, derartige Schäden an Rohren oder anderen Versuchskörpern innerhalb und außerhalb des Reaktors nachzubilden, liefern einige besondere Befunde.

So zeigen nur etwa 20 % der Hüllrohre mit Primärschaden auch gravierende Sekundärschäden. Häufig sind dabei die Verschlußkappen am oberen Ende abkorrodiert oder abgesprengt, was durch beim Schweißen unabsichtlich erzeugte, großflächige Korrosionskeime erklärt werden könnte, die durch das Kühlmittel aktiviert werden. Deshalb werden verhältnismäßig massive Kappen mit entsprechend starken, sorgfältig ausgeführten Schweißnähten verwendet.

Die großflächigen Schäden gehen oft von einem Defekt ("Keim") aus, der erheblich oberhalb dem unteren Brennstab liegt.

Der großflächige Schaden, der als Folgeschaden (Sekundärschaden) des Primärschadens angesehen wird, ist meist rißförmig, das heißt er verläuft längs einer Linie, als deren Ursache die Spannungen im Hüllrohr angesehen werden. Diese Linien können aber auch schraubenförmig um die Achse des Brennstabs verlaufen. Dies könnte als Folge einer mehrachsigen Spannung gedeutet werden.

Die Sekundärschäden treten in einem Bereich auf, bei dem das Zirkaloy bzw. das Zirkonium durch Wasserstoff und/oder Hydrid-Ausscheidungen versprödet ist. Der Wasserstoff kann dabei prinzipiell als Oxidations-Wasserstoff entstehen, der aus dem Wasser bei der Oxidation des Zircaloys abgespalten wird. An der Innenfläche des Zircaloys sind jedoch im allgemeinen nur verhältnismäßig dünne Oxidationsschichten erkennbar, so daß bei deren Bildung nur verhältnismäßig wenig Wasserstoff frei werden kann, wobei zudem die Oxidationsschicht selbst eine Diffusionsbarriere für den Wasserstoff bildet und das Trägermaterial des Hüllrohres hinsichtlich der Korrosion durch Wasserstoff passivieren müßte. Weiterer Wasserstoff könnte durch Oxidation des Brennstoffs und durch Radiolyse entstehen.

Die Mehrzahl der primär-geschädigten Liner-Hüllrohre zeigt keine größeren Sekundärschäden. Trotz der erhöhten Korrosion von Zirkonium (verglichen mit Zircaloy) schützt offensichtlich die wachsende Oxidschicht den Liner ausreichend. Jedoch sind die größten Sekundärschäden bei Hüllrohren mit einem Liner aus Reinzirkonium beobachtet worden. Dieser Umstand ist besonders bei der Entwicklung geeigneter Liner-Materialien zu beachten und hat zur Entwicklung der erwähnten Zr-0,2 ... 0,8 Fe-Legierung geführt.

Die Erfindung berücksichtigt, daß das durch den Primärschaden eingetretene Wasser (Kühlmittel) dort zu einer Atmosphäre führt, die das Material an der Innenfläche des Hüllrohres nicht sofort angreift und zerstört, sondern sich langsam ändert, bis ein kritischer Zustand erreicht ist, bei dem ein bis dahin nicht wirksamer Korrosionskeim aktiviert wird, der unter diesen Bedingungen zu einem rasch wachsenden Riß oder Loch führt.

Ein solcher kritischer Zustand kann zum Beispiel entstehen, wenn eingedrungenes Wasser mit dem Brennstoff reagiert und zu einem hohen Wasserstoff-Partialdruck führt, bei dem der Wasserstoff in die Hüllrohrwand diffundieren kann (vor allem, wenn eine passivierende Oxidschicht an der Hüllrohr-Innenfläche durch Wechselwirkung mit dem Brennstoff lokal geschädigt ist). Dabei kann sich an einer beliebigen Störstelle im Material des Hüllrohres, z. B. einem Kratzer oder einer anderen Strukturstörung, die auch an der Hüllrohraußenseite liegen kann, der eindiffundierte Wasserstoff anreichern, insbesondere wenn die Störung verhältnismäßig ausgedehnt ist. Schließlich kann sich durch Materialversprödung ein Spannungsriß bilden, die Störstelle hat also als Keim für die Bildung des Loches gewirkt. Dieser Keim wurde durch Wasserstoff aktiviert.

Gemäß der Erfindung wird nun vorsätzlich im Hüllrohr ein Keim, vorzugsweise ein nahezu punktförmiger oder kleinflächiger Keim, angebracht, der aber erst durch das eingedrungene Wasser (Kühlmittel) - also erst nach einem Primärschaden-aktivierbar ist und zu einem entsprechenden Loch führt.

Dieses provozierte Loch ermöglicht dann im Zusammenspiel mit dem Primärschaden, daß die Atmosphäre im Inneren des Hüllrohres ständig ausgetauscht wird durch eine entsprechende, Kühlmittel enthaltende Atmosphäre, bevor sich ein kritischer Zustand aufbauen kann.

Daher ist es vorteilhaft, diesen Keim nahe dem oberen Ende oder jedenfalls oberhalb des Bereiches anzubringen, in dem beim überwiegenden Teil der untersuchten geschädigten Brennstäbe die kleinflächigen Primärschäden gefunden werden.

Insbesondere bietet sich für diesen Keim eine Position am Hüllrohr an, die oberhalb oder unterhalb des Bereichs liegt, der den Brennstoff enthält. An dieser Position ist das Hüllrohr nur geringeren thermischen Belastungen ausgesetzt und damit besteht eine besonders geringe Gefahr, daß durch den Keim bereits ein Primärschaden entstehen könnte.

Auch kann es sich als ausreichend erweisen, derartige Keime nur am unteren Ende des Hüllrohres anzubringen, also in größerer Nähe der Primärschäden, soweit diese bevorzugt dort auftreten sollten. Im anderen Fall könnte es vorteilhaft sein, an beiden Enden derartige Keime an beiden Enden vorzusehen.

Gegenwärtig ist nicht ganz geklärt, welche chemischen und physikalischen Vorgänge nach einem Eindringen von Wasser in das Hüllrohr zur Ausbildung der ausgedehnten Sekundärschäden führen. Die folgenden Figuren, Versuche und Überlegungen gehen davon aus, daß dabei vor allem der Wasserstoff beteiligt ist, der sich durch Reaktion von eingedrungenem Wasser mit dem oxidationsfähigen, heißen Brennstoff in größeren Mengen bildet und zu einer trockenen H₂-Atmosphäre im Hüllrohr führt. Die konkret vorgeschlagene Ausbildung des Korrosionskeims ist diesen Vorstellungen über die nach einem Primärschaden auftretende korrosive Atmosphäre derart angepaßt, daß diese Atmosphäre zu einer von dem Keim ausgehenden Korrosion und einem entsprechenden kleinflächigen Loch führt, das eine weitere Verschärfung der Schadensbedingungen im Hüllrohr-Innenraum verhindert.

Weitere oder andere Möglichkeiten, wie ein derartiger Korrosionskeim ausgestaltet und erzeugt werden kann, können sich ergeben, wenn der Mechanismus, der zu den großflächigen Sekundärschäden führt, genauer bekannt ist. Dabei sind folgende Bedingungen zu beachten:
a) Das Hüllrohr ist gegenüber den normalen Betriebsbedingungen bei intaktem Hüllrohr möglichst beständig, also mindestens korrosionsbeständig gegenüber den im Kühlmittel an der Außenfläche vorliegenden Bedingungen und gegenüber den an der Innenfläche vorliegenden Bedingungen (einschließlich der chemischen un thermischen Belastungen und der Wechselwirkungen zwischen dem Brennstoff und dem Hüllrohr - "pellet cladding interaction"). Vorzugsweise ist dabei das Hüllrohr auch gegen Zerstörungen möglichst beständig, die auftreten können, wenn flüssiges Kühlmittel und/oder eine mit Kühlmitteldampf weitgehend gesättigte Atmosphäre im Hüllrohr-Innenraum vorliegt. Wie bereits erwähnt wurde, ist bei Siedewasser-Brennelemente ein Hüllrohr aus Zircaloy mit einer metallurgisch gebundenen Innenauskleidung aus Zr-Fe besonders vorteilhaft.
b) Im Hüllrohr ist ein Keim vorgesehen, der ein Loch im Hüllrohr erst dann provoziert, nachdem Kühlmittel durch einen Schaden im Hüllrohr eingedrungen ist, wobei dieser Keim durch das eingedrungene Kühlmittel oder dessen Reaktionsprodukte leicht aktivierbar ist und zu einem Loch führt, bevor sich im Hüllrohr verschärfte Bedingungen ausbilden können, die an anderen Unregelmäßigkeiten im Hüllrohr (schweißnähte, Strukturfehler, Kratzer), die ebenfalls als - unbeabsichtigte - Keime zur Bildung eines Schadens wirken können und durch die verschärften Bedingungen aktivierbar sind, unkontrollierte Schäden erzeugen.

Außerhalb des absichtlich angebrachten Keimes neigt das Hüllrohr also nicht zu Sekundärschäden, solange sich die eingeschlossene Atmosphäre nicht durch die Ansammlung von Reaktionsprodukten des eingedrungenen Kühlmittels verändert, sondern sich durch Austausch der entstehenden flüssigen und/oder gasförmigen Reaktionsprodukte mit neu eintretendem Kühlmittel erneuert. Dabei ist es in gewissem Maße durchaus tolerierbar, daß die Innenfläche des Hüllrohres für Oxidation durch das Kühlmittel anfällig ist, falls sich dadurch eine Schutzschicht auf der Innenfläche bildet, die das Hüllrohr gegenüber dem weiteren Angriff durch das Kühlmittel selbst schützt. Eine erhöhte Beständigkeit gegen Reaktionsprodukte des Kühlmittels (zum Beispiel Wasserstoff) ist dagegen nicht unbedingt von der Innenfläche des Kühlmittels zu fordern. Das provozierte Loch ermöglicht nämlich den Abtransport der entstehenden Reaktionsprodukte, die sich daher im Innenraum nicht ansammeln und keine gefährlichen Konzentrationen erreichen.

Diese und weitere vorteilhafte Weiterbildungen der Erfindung sind in den Unteransprüchen angegeben.

Anhand von 24 Figuren und fünf Ausführungsbeispielen wird die Erfindung näher erläutert. Es zeigen:
Figur 1 einen Längsschnitt durch einen intakten Brennstab nach der Erfindung,
Figur 2 das Wachstum einer mit Hydrid angereicherten Zone für verschiedene, Wasserstoff und Wasserdampf ausgesetzte Oberflachen,
Figur 3 die prozentuale Änderung der Länge und des Durchmessers eines Rohres durch die Aufnahme von Wasserstoff,
Figur 4 eine Versuchsanordnung, um im Labor den Mechanismus bei der Bildung eines großflächigen Sekundärschadens nachzubilden,
Figur 5 die Dauer bis zum Bruch der Hülle in Abhängigkeit von der Temperatur bei der nach Figur 2 nachgebildeten Entstehung des Schadens,
Figuren 6 bis 9 die Wirkung eines Primärschadens bei einem Brennstab nach dem Stand der Technik,
Figur 10 bis Figur 15 Querschnitte durch einen Bereich des Hüllrohrs mit verschiedenen Stadien bei der Bildung eines Sekundärschadens,
Figur 16 einen Schliff durch einen im Labortest erzeugten Schaden,
Figur 17 die Dauer bis zum Bruch der Hülle im Labortest in Abhängigkeit von der Tiefe eines an der Außenseite eingegrabenen Strukturfehlers,
Figur 18 und 19 die Wirkung des erfindungsgemäßen Keims nach einem Primärschaden,
Figur 20 bis Figur 23 den Querschnitt durch einen Bereich verschiedener Hüllrohre mit verschiedenen Ausführungsbeispielen von erfindungsgemäßen Keimen, und
Figur 24 die obere Endkappe eines Ausführungsbeispiels der Erfindung.

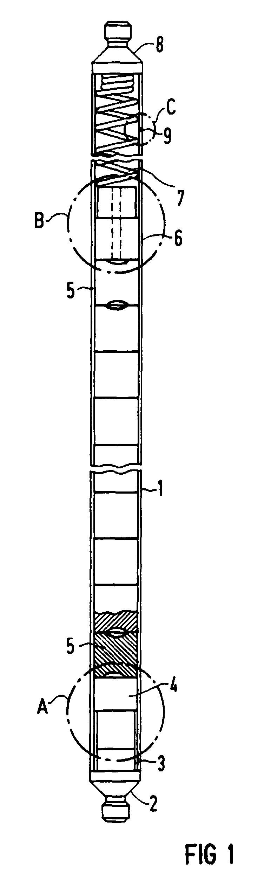

Der Brennstab der Figur 1 besteht aus einem Hüllrohr 1, insbesondere einem Rohr aus Zircaloy, dessen unteres Ende mit einer unteren Endkappe 2 verschlossen ist. Diese Endkappe trägt einen Stützkörper 3 zum Abstützen eines Endstopfens 4, auf dem eine Säule von Pellets 5 angeordnet sind.

Die zylindrischen Pellets 5 bestehen weitgehend aus Urandioxid, das in Anwesenheit von Wasserdampf höherer Temperatur in höhere Oxidationsstufen (U₃O₈, UO₃) unter H₂-Entwicklung überführbar ist. Ihr Zylinderdurchmesser ist ca. 0,4 mm kleiner als der Innendurchmesser des Hüllrohrs 1, so daß zwischen den Pellets und der Innenfläche des Hüllrohrs 1 ein Spalt entsteht, in den sich das frische Pellet ausdehnen kann, sobald es infolge der Strahleneinwirkung beim Reaktorbetrieb zu Schwellen anfängt. Das zwischen der Pellet-Säule und dem Hüllrohr gebildete Volumen ist jedoch sehr klein.

Die Pellet-Säule ist oben durch einen oberen Endstopfen 6 abgeschlossen, der über eine Feder 7 gegen eine das obere Ende des Hüllrohrs abschließende Endkappe 8 abgestützt ist. Dadurch entsteht ein freies Volumen, in den durch eine entsprechende Bohrung des oberen Endstopfens 6 Spaltprodukte, die durch die nuklearen Vorgänge beim Reaktorbetrieb entstehen, entweichen und sich sammeln können. Der erfindungsgemäß vorgesehene Keim 9 kann vorteilhaft in einem Teil am oberen Ende des Brennstabs angeordnet sein, in dem der Brennstab keinen Brennstoff enthält, zum Beispiel an einer Stelle C am von der Feder freigehaltenen Gas-Sammelraum.

Im Bereich A kann der untere Endstopfen 4 durch Aufschrumpfen oder auf andere Weise dicht am Hüllrohr 1 gehalten sein, wie in der deutschen Patentanmeldung 42 18 023 beschrieben ist, die auch den Aufbau des Bereichs B mit dem oberen Endstopfen und der Feder zeigt.

Für die Schädigung des Hüllrohrmaterials erscheint der Reaktionswasserstoff verantwortlich, der nach einem Primärschaden aus dem eingedrungenen Wasser im Hüllrohr entsteht und dazu führt, daß sich in der äußersten Schicht des Zircaloys Hydridpartikel ausscheiden, die im Schliff als Hydrid-Saum erkennbar sind.

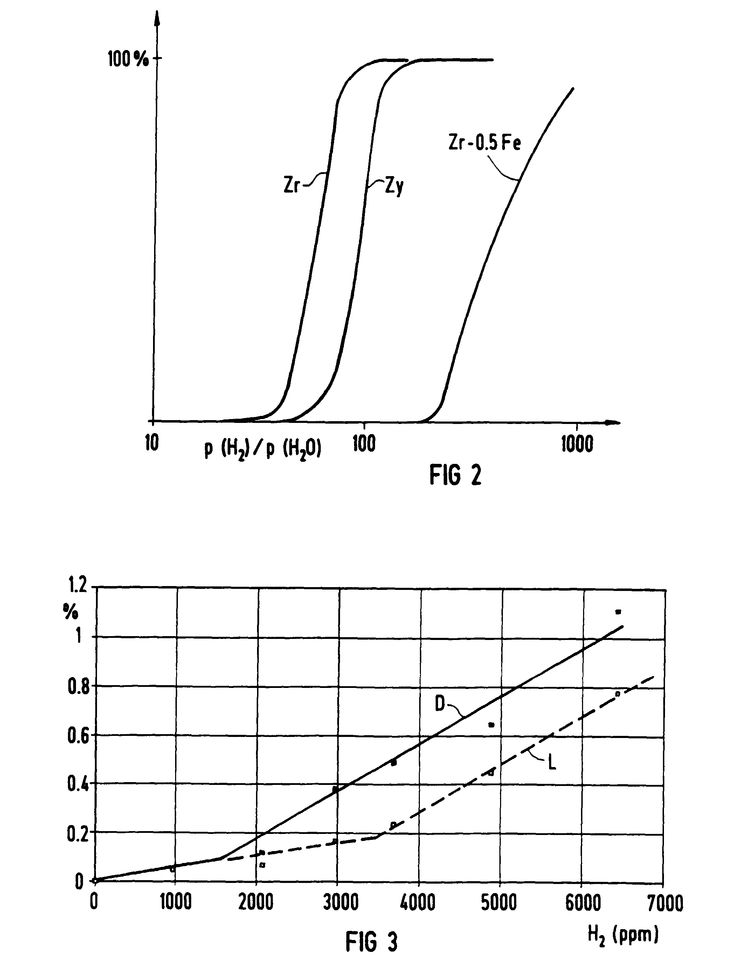

Innerhalb von drei Tagen bildet sich nur ein schmaler Hydrid-saum in verhältnismäßig trockenem Wasserstoff, z. B. bei einem Partialdruck von p(H₂) : p(H₂O) = 40, bei Druckverhältnissen p(H₂) : p(H₂O) = 180 aber wächst er auf einen Wert von etwa 230 µm an, jeweils bei Temperaturen von 350 °C und Drucken von 100 bar (Kurve "Zy" in Figur 2) gemessen. Dieser Hydridsaum erreicht schließlich einen Grenzwert, der durch die Volumina der Reaktionspartner vorgegeben ist.

Das Wachstum der relativen Dicke (bezogen auf diesen Grenzwert) setzt bei praktisch reinem Zirkonium (Kurve "Zr") bereits in einer feuchten Atmosphäre ein und erreicht schon bei etwa p(H₂) : p(H₂O) = 90 den Höchstwert. Rein-Zirkonium wird also nicht nur schneller korrodieren als ein homogenes Zircaloy-Hüllrohr, wenn Wasser in seinen Innenraum eindringt, sondern auch rascher zur Versprödung durch Hydrid-Bildung neigen.

Der Zr-Liner ist zwar für die Verhinderung von Primärschäden nützlich, kann jedoch eine Hydrierung und eine Bruchgefahr verschlimmern, sobald Wasser in das Hüllrohr eingetreten ist. Wird dem Reinzirkonium jedoch 0,5 % Eisen zulegiert, so entsteht die Kurve "Zr-0,5 Fe" der Figur 2. Dieses günstige Material ist also bereits gut geeignet, um Sekundärschäden sowohl im Hinblick auf ihre Ursache (Primärschäden) als auch auf Korrosionsbeständigkeit zu vermeiden.

Die Hydrierung bewirkt eine Volumenzunahme im Metall und daher innere Spannungen des Metalls. Dies ist in Figur 3 gezeigt, wo die relative Änderung der Länge L und des Durchmessers D als Funktion des H₂-Gehaltes im Material eines Stabes aus Zircaloy gezeigt ist. Folglich kommt es zu erheblichen Spannungen im Hüllrohr, sobald die Wasserstoff-Konzentration im Metall die Löslichkeitsgrenze überschreitet und Hydride ausgeschieden werden.

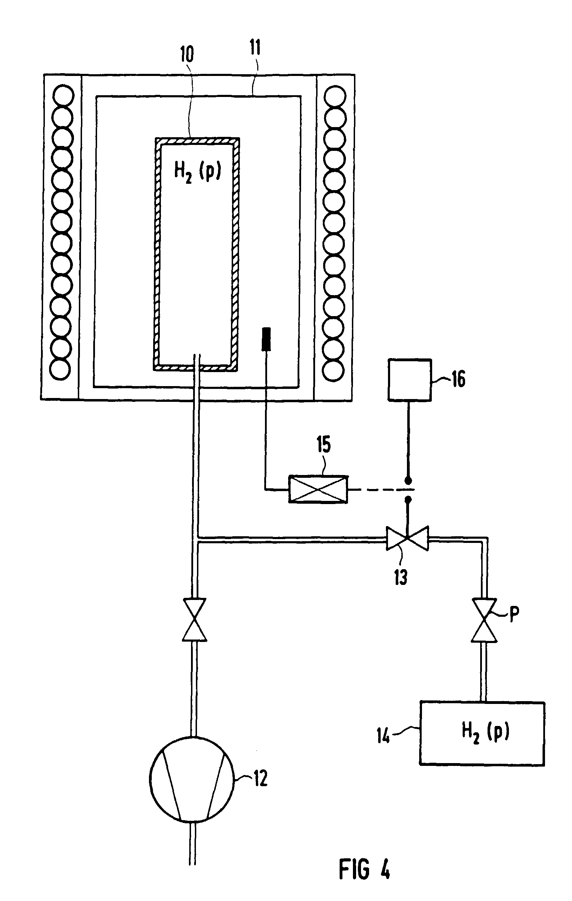

Daß diese Vorgänge zur vollkomenen Zerstörung eines Rohres führen können, kann nach Figur 4 durch ein Proberohr 10 in einem Behälter 11 simuliert werden, der durch einen Ofen 11' auf vorgegebener Temperatur gehalten ist. Das Proberohr 10 wird zunächst mittels einer Pumpe 12 evakuiert, um eine Passivierung der Innenoberfläche des Rohrstücks durch eine Oxidschicht zu verhindern. Anschließend wird über ein Ventil 13 aus einem Wasserstoff-Reservoir 14 gasförmiger Wasserstoff mit einem vorgegebenen Druck p (Reduzierventil P) in das Proberohr 10 eingeleitet. Wird dabei im Innenvolumen des Proberohrs Überdruck gegenüber dem Druck (zum Beispiel Normaldruck) im Inneren des Behälters 11 erzeugt, so kann durch einen Drucksensor 15 erfaßt werden, wann die Wand des Proberohrs durch Korrosion zerstört wird und im Behälter 11 ein Druckanstieg auftritt. Das Sensorsignal schließt bei einem Leck die Wasserstoffzufuhr und stoppt einen Zeitzähler 16, der beim Öffnen des Ventils 13 gestartet worden war. Anschließend wird das Proberohr auf Schäden untersucht.

Während sich die dem Wasser des Kernreaktors ausgesetzten Oberflächen der Zirkaloy-Rohre erst nach mehreren Betriebszyklen des Reaktors mit einer dickeren Oxidschicht überziehen und auch bei heißem Wasserdampf die Dauer, bis die Zirkaloy-Wand durchkorrodiert ist, viele Jahre beträgt, wird diese Dauer in dem erwähnten Versuch bei Wasserstoff auf mehrere Tage bis zu wenigen Stunden, abhängig von der jeweiligen Versuchstemperatur, verkürzt. Sie verlängert sich erst, wenn dem Wasserstoff Wasserdampf zugesetzt ist, da dann (z. B. wegen einer passivierenden Oxidationsschicht auf der Zircaloy-Innenfläche des Proberohrs 10, die als Diffusionsbarriere wirkt) die Bildung der Hydridschicht auf der Oberfläche behindert ist, wie Figur 2 zeigte.

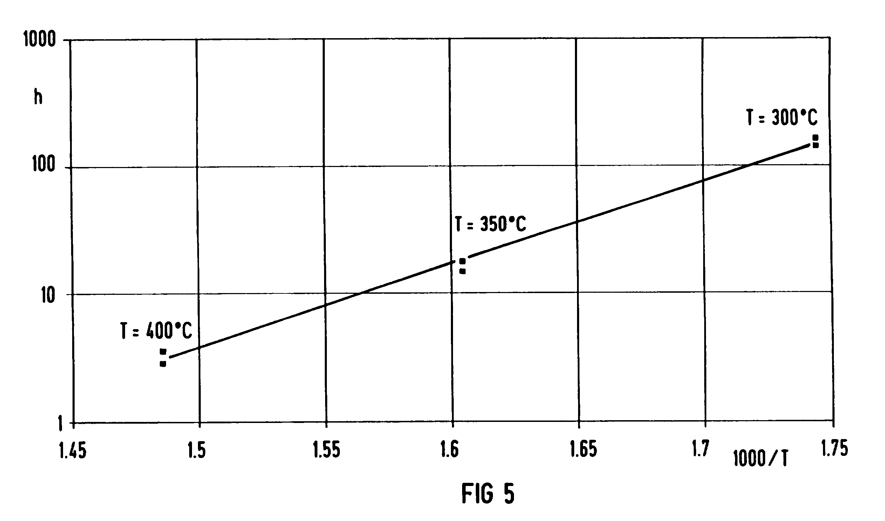

Figur 5 zeigt die gemessenen Schadensdauern in Abhängigkeit von der Temperatur in einer trockenen H₂-Atmosphäre unter Normaldruck. Bei 300 °C tritt erst nach etwa 150 Stunden, bei 400 °C schon nach etwa 3 Stunden ein Leck auf.

Die Untersuchung der Korrosionsschichten zeigt dabei, daß die Hydrierung des Zircaloys so fortschreitet, daß die Materialstruktur aufgelöst wird, bis das Material zerfällt.

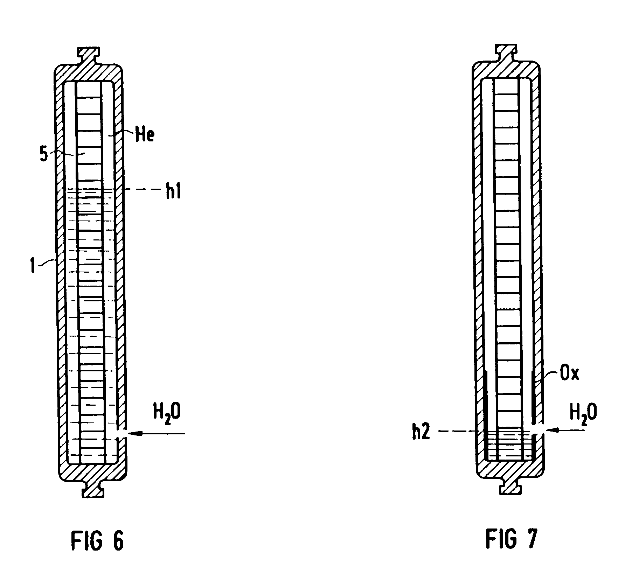

In den Figuren 6 bis 9 sind verschiedenen Stadien beim Entstehen von Primär- und Sekundärschäden dargestellt, die eine Modellvorstellung für den Schadensmechanismus erläutern. Dabei ist - ohne Rücksicht auf die tatsächlichen Größenverhältnisse - schematisch das Hüllrohr 1 und die Säule der Pellets 5 eines Brennelements dargestellt, das im kaltem, fabrikneuem Zustand mit Helium bei einem Druck von etwa 5 bar gefüllt ist. Im Siedewasser-Reaktor ist dieses Rohr von Kühlwasser mit etwa 70 bar umgeben.

Brennstäbe werden bei ihrer Herstellung sehr genau überprüft. Zur besseren Erläuterung sei angenommen, im unteren Teil des Brennstabs sei bereits nach kurzer Betriebsdauer ein Primärschaden W in Form einer kleinen Öffnung entstanden, durch die Kühlwasser in den Innenraum des Brennstabes strömt. Es kommt zu einem Druckausgleich, bei dem das Helium im Brennstab auf ein kleines Volumen oberhalb des Wasserspiegels h1 im Innenraum komprimiert wird (Figur 6).

Das eingedrungene Wasser reagiert sowohl mit dem Brennstoff als auch mit dem Hüllrohrmaterial und setzt Korrosionswasserstoff frei. Dieser steigt im Brennstab auf und der Wasserspiegel sinkt auf das Niveau h2 (Figur 7). Im oberen Bereich des Innenraums führt das zu einer zunehmend trockeneren Atmosphäre. Nur vom Boden des Innenraums, an dem sich das eindringende Wasser sammelt, kann Wasserdampf nachgeliefert werden, so daß es dort zur Bildung einer Oxidschicht Ox auf der Rohrinnenseite kommt.

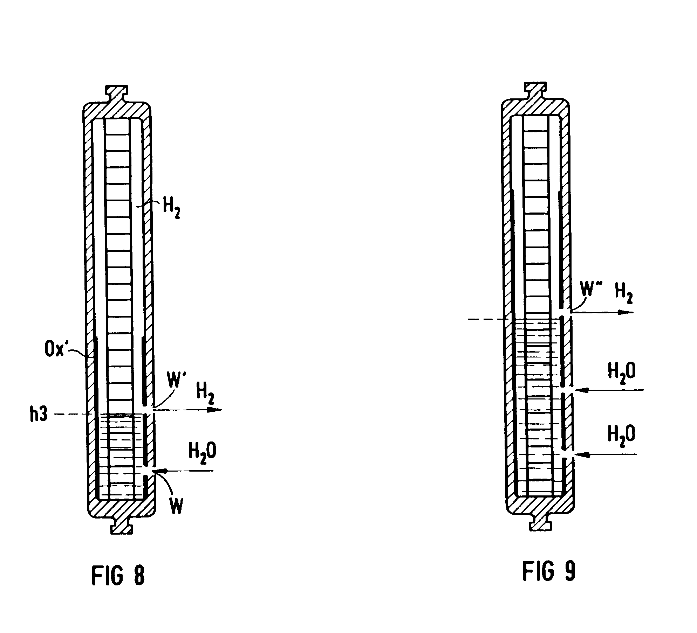

Diese Oxidschicht Ox schützt das Hüllrohr vor dem Angriff des Wasserstoffs, jedoch kann es in dem noch nicht vollkommen ausgetrockneten Mittelbereich des Innenraums, in dem durch die Oxidation des Brennstoffs ständig Wasserstoff nachgeliefert wird, oberhalb der Oxidationsschicht zur Hydrierung des Hüllrohres und schließlich zu einem Sekundärschaden W' kommen, der in Figur 8 zunächst als ebenso klein und tolerierbar angenommen ist, wie der Primärschaden W.

Nun liegen zwei Öffnungen W und W' vor und durch die Öffnung W kann gerade soviel Wasser nachströmen, wie unter Berücksichtigung der Volumenzunahme bei der Bildung des Wasserdampfes und der Oxidation des Brennstoffs entsteht und als Gas durch die Öffnung W' austritt. Es kommt also zu einem Teilaustausch zwischen dem stark wasserstoffhaltigen Gas des Innenraumes und dem Wasserdampf, der durch die Verdampfung des nachströmenden Wassers entsteht, wobei der Wasserspiegel im Innenraum auf eine Höhe h3 ansteigt. Von diesem Niveau h3 aus wiederholt sich der Vorgang unter Bildung einer höher gelegenen Oxidationsschicht Ox' und fortschreitender Oxidation des Brennstoffs, wobei es zu einem erneuten, zusätzlichen Schaden W" kommen kann (Figur 9).

Entscheidend für diese Schadensbildung wird gemäß der Erfindung die Reaktion des durch den Primärschaden eingetretenden Kühlmittels angesehen, dessen Reaktionsprodukte das Hüllrohr-material angreifen. Gemäß den in den Figuren 6 bis 9 erläuterten Vorstellungen handelt es sich bei den Reaktionsprodukten des Kühlmittels vor allem um Oxidationswasserstoff, der durch die Oxidation des Wasserdampfs mit dem Brennstoff entsteht (die Oxidation an der Hüllrohr-Innenfläche ist demgegenüber wegen der niedrigeren Rohrtemperatur nur von untergeordneter Bedeutung) und das Rohrmaterial (in der Regel Zircaloy, bei Liner-Hüllrohren der Liner) wird durch Hydrierung angegriffen.

Der Schadensprozeß wird dadurch verlangsamt, daß bei fortschreitender Oxidation die Oxidationsneigung des Brennstoffs nachläßt und die Hüllrohr-Innenfläche durch eine langsam aufwachsende Oxidschicht gegenüber eindiffundierendem Wasserstoff zunehmend gestützt wird. Der Sekundärschaden W' bewirkt dabei, daß der Austausch zwischen der gebildeten, weitgehend trockenen Wasserstoffatmosphäre einerseits, die durch die Schäden W' bzw. W'' ausströmt, und verdampftem Wasser andererseits, das durch den Primärschaden W einströmt, erleichtert wird, so daß die Austrocknung des Innenraumes schließlich unterbrochen und/oder sogar rückgängig gemacht wird. Damit gewinnt die Oxidation an der Hüllrohr-Wand an Bedeutung, während gleichzeitig deren Hydrierung gemäß Figur 2 abnimmt.

Es treten also verschieden Effekte auf, für die miteinander konkurrierende Prozesse wesentlich sind, die diese Effekte gegenläufig beeinflussen. So wird die Austrocknung durch die Oxidation des Brennstoffs verursacht und beschleunigt, durch Austausch von trockener Atmosphäre mit eindringendem Kühlwasser aber gehemmt. Bei der Oxidation selbst konkurriert der Brennstoff mit dem Hüllrohr-Material. Der Diffusion des Wasserstoffs in das Hüllrohr-Material und der Hydrierung wirkt eine Oxidschicht auf der Oberfläche entgegen. Diese verwickelten Vorgänge sind eng an die Materialeigenschaften der inneren Hüllrohrfläche gebunden. Zwar sind Hüllrohre mit dem erwähnten Zr/0,2 ... 0,8 Fe-Liner (DE-U-92 06 038) noch nicht lange bekannt, so daß noch keine langjährigen Erfahrungen mit deren Einsatz in Kernreaktoren zur Verfügung stehen, jedoch läßt die Figur 2 eine wesentlich verringerte Neigung dieser Hüllrohre zu Sekundärschäden erwarten. Denn dieses Material, das eine hohe oxidationsbeständigkeit gegenüber H₂O besitzt, wird durch das Kühlmittel (Wasser) und dessen Dampf nur sehr langsam angegriffen und auch von dessen Reaktionsprodukten (insbesondere dem Oxidationswasserstoff) nur wenig verändert, wobei insbesondere die Hydrierung, wie Figur 2 zeigt, erst dann nennenswert einsetzt, wenn die Reaktion des eingedrungenen Kühlmittels zu einer sehr hohen Konzentration der entstandenen Reaktionspartner (d. h. zu einem sehr hohen Partialdruck p(H₂), also einer sehr trockenen H₂-Atmosphäre) geführt hat. Darin unterscheidet sich dieser Liner von Zircaloy und insbesondere von Linern aus Reinzirkonium oder anderen, schwachlegierten Zr-Legierungen. Außerdem kann der Zr-Fe-Liner wegen seiner hohen Duktilität innere Spannungen ausgleichen, die wegen in der in Figur 3 gezeigten, mit der Hydrierung verbundenen Volumenzunahme entstehen und letztlich dazu führen, daß die Struktur des Hüllrohrs als Folge dieser hohen Konzentration der Reaktionsprodukte (Oxidationswasserstoff) zerstört wird.

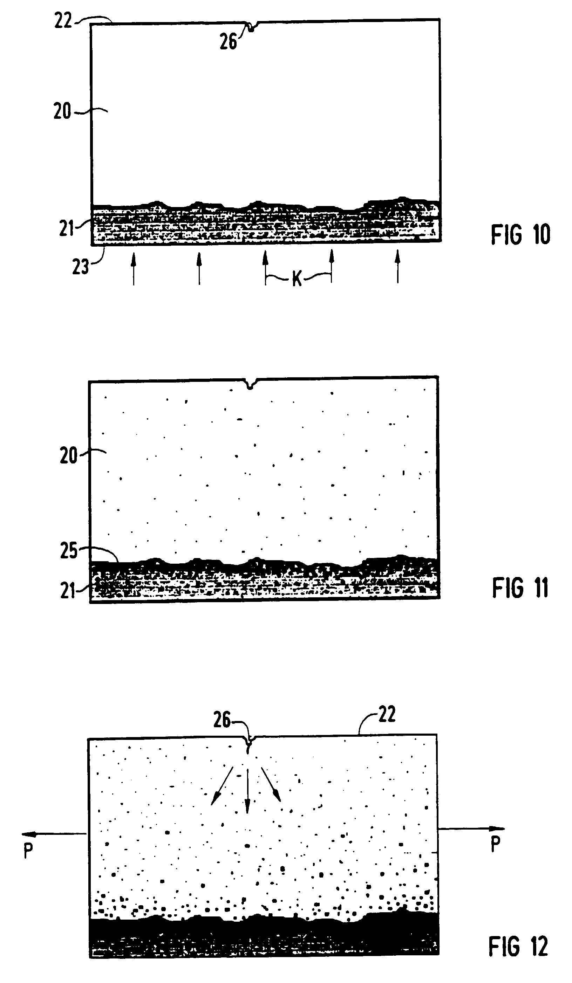

Die Rolle des Wasserstoffs und der inneren Spannung, die bei der Hydrierung durch die Volumenzunahme entsteht, wird durch eine weitere Modellvorstellung erklärbar, der die Eigenschaft des Wasserstoffs zugrundeliegt, sich an Strukturstörungen im Material zu konzentrieren, und die anhand der Figuren 10 bis 15 erläutert wird. Strukturstörungen im Material können Fremdkörper, Grenzflächen zwischen verschiedenen Materialschichten (z. B. der Matrix des Hüllrohrs und dessen Liner), innere Spannungen oder auch äußere Schäden wie z. B. Kratzer oder Kerben in der Oberfläche des Rohres sein.

Solche Strukturstörungen wirken dann als Keim für einen Sekundärschaden, wobei dieser Keim durch den Oxidationswasserstoff (allgemeiner: die Reaktionsprodukte des Kühlmittels) aktivierbar ist, auch wenn das Hüllrohrmaterial und das Material bzw. die Struktur des Keims durch das Kühlmittel selbst praktisch nicht verändert wird.

Figur 10 zeigt zunächst einen Ausschnitt eines Querschnitts durch einen Probekörper, der ein derartiges Hüllrohr simuliert und auf einer Matrix 20 aus Zircaloy 2 einen Kratzer 26 als Keim auf der Außenfläche 22 und eine Innenschicht 21 als Liner auf der Innenseite 23 trägt. Der Kratzer 26 ist als Kerbe dargestellt und wirkt als Keim, der durch den an der Innenseite angreifenden Wasserstoff (Pfeil K) aktiviert wird, wie die nachfolgenden Figuren erläutern.

Durch die Innenfläche 21 des Rohres tritt zunächst, wie aus früheren Messungen bekannt ist, Wasserstoff ein. Er führt dort zu einer ansteigenden Konzentration, wie durch die Punkte in Figur 4 dargestellt ist, und scheidet sich als Hydride aus, die das Metall verspröden. Diese Hydride, die in Figur 11 als schwarze Punkte dargestellt sind, sammeln sich zunächst hauptsächlich im Liner, da die Grenzschicht zwischen den Materialien der Matrix und des Liners als Diffusionsbarriere für den Wasserstoff wirkt. Sie bewirken eine Volumenvergrößerung des Materials, die sich als Zugspannung des Rohres auswirkt, wie die Pfeile P in Figur 12 angeben. Das Rohr erfährt dadurch sowohl in der Länge wie auch im Umfang eine Verformung.

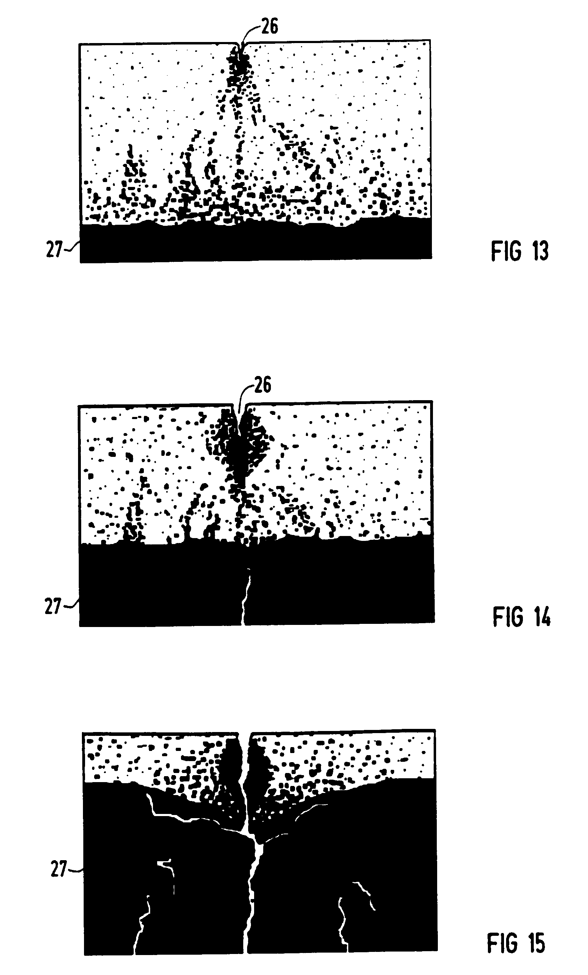

Solche Spannungen greifen vor allem auch an den erwähnten Strukturstörungen an (also z. B. im Kerbgrund des Kratzers 26), wo es daher zu dichteren Ansammlungen von Hydridausscheidungen (Figur 13) und lokalen Versprödungen kommt. Schließlich reißt das Rohr, von dieser Stelle ausgehend, ganz auf (Figuren 14 und 15).

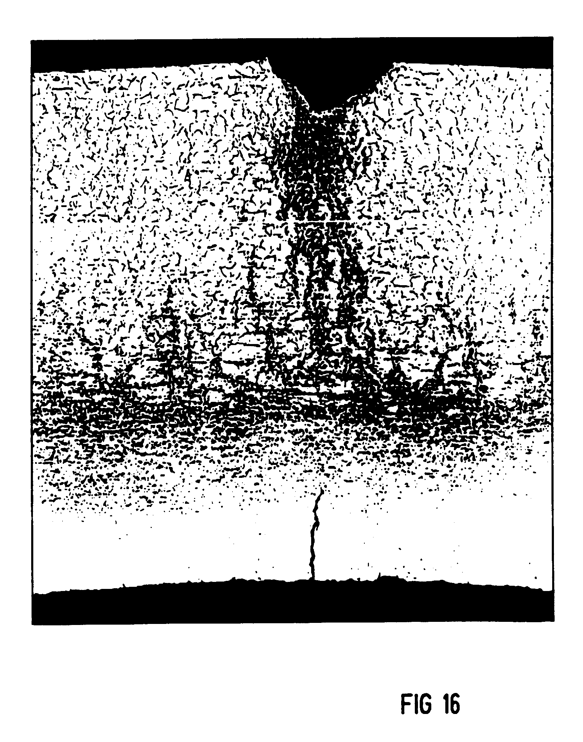

Dieses Stadium gibt der in Figur 16 gezeigte Schliff durch einen entsprechenden, in einer nach Figur 3 aufgebauten Apparatur untersuchten Probekörper wieder.

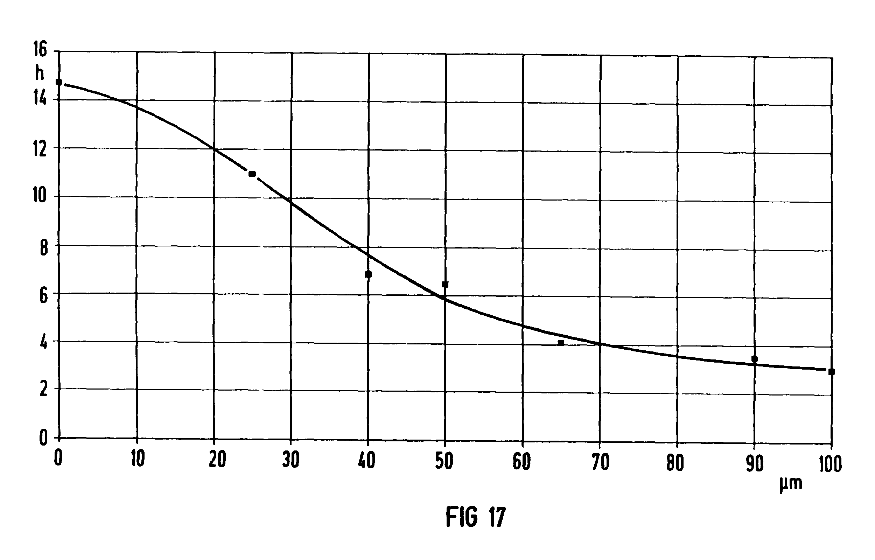

Der Riß des Rohres tritt um so schneller auf, je tiefer die Kerbe bereits ursprünglich war. In Figur 17 ist die Standzeit des Probekörpers bei 350 °C in Abhängigkeit von der Tiefe dieses Strukturfehlers gezeigt: Reicht die Kerbe von der Außenfläche des Rohres 100 µm tief in die Rohrwand, so ist die Wand an dieser Stelle bereits nach 3 Stunden aufgerissen, während es bei einer Tiefe von 25 µm ca. 11 Stunden dauert. Ohne sichtbaren Kratzer an der Außenfläche bildet sich nach ca. 15 Stunden zum Beispiel an irgendeiner zufälligen Unregelmäßigkeit ein Riß aus.

Die Größe des Sekundärschadens, der bei den Figuren 6 bis 10 zunächst als praktisch punktförmig angenommen wurde, hängt natürlich von der Ausdehnung des Keimes ab. Handelt es sich um kleine Unregelmäßigkeiten, wie sie unvermeidlich sind und bei der fabrikmäßigen Kontrolle der Brennstäbe auch nicht entdeckt werden können, so sind auch die Sekundärschäden entsprechend klein. Wären überhaupt keine Unregelmäßigkeiten in der Matrix vorhanden, so könnte schließlich sogar die Grenzfläche zwischen dem Liner und der Matrix selbst als Keim wirken.

In diesem letztgenannten Fall und im Fall, daß das Hüllrohr andere, ausgedehnte Keime aufweist, z. B. Kratzer, wie sie beim Einsetzen der Brennstäbe in gitterförmige Stützstrukturen ("spacer" oder Abstandhalter) des Brennelementes entstehen können, bilden sich die eingangs genannten, gefürchteten langen Risse oder ausgedehnte Sekundärschäden. Werden die Brennstäbe mit einer Drehbewegung in die Brennelemente eingesetzt, so können spiralförmige Kratzer entstehen, wodurch auch die eingangs erläuterten spiralförmigen Risse erklärbar werden, die vereinzelt beobachtet wurden.

Aus der Beschreibung der Figuren 8 und 9 geht hervor, daß kleinflächige Sekundärschäden, die also von Keimen geringer Ausdehnung verursacht werden, für den Reaktorbetrieb selbst kaum schädlich sind und toleriert werden können. Auf die Schadensbildung selbst aber haben sie eine äußerste günstige Wirkung da sie den Austausch zwischen der trockenen H₂-Atmosphäre und dem Dampf des eindringenden Wasser beschleunigen, also das Austrocknen im Hüllrohr-Innenraum verhindern. Daher können Reaktionsprodukte des eingetretenen Kühlmittels keine kritischen Konzentrationen erreichen, d. h. der Partialdruck des durch Oxidation entstandenen Wasserstoffs erreicht nicht die Werte, die nach Figur 2 zu einer schnellen Hydrierung des Rohrmaterials führen würden.

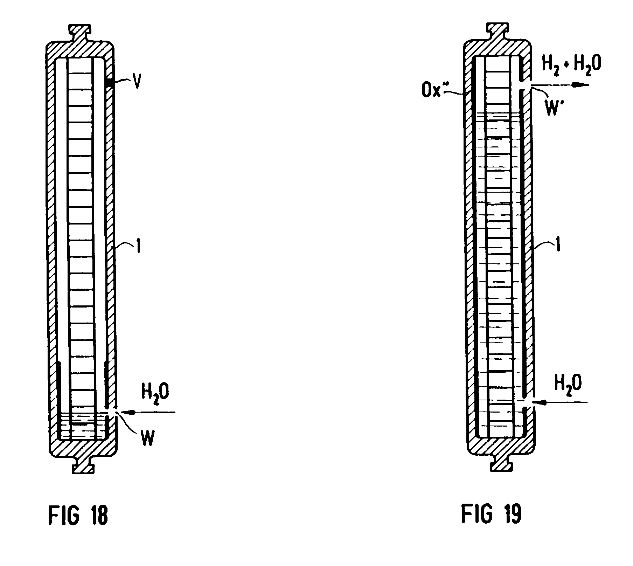

Die Erfindung überläßt es nun nicht dem Zufall, ob ein bedeutungsloser Sekundärschaden auftritt oder ob das Hüllrohr schwerwiegend geschädigt wird. Vielmehr wird von vornherein und vorsätzlich ein Keim für einen Sekundärschaden im Hüllrohr angebracht, wobei dieser Keim aber so ausgestaltet ist, daß er nur zu einem kleinflächigen Sekundärschaden führt und von dem Reaktionsprodukt des Kühlmittels, also dem Oxidationswasserstoff, leichter aktiviert wird, als andere, zufällig und unvermeidlich im Hüllrohr vorhandene Keime. Entsprechend Figur 6 zeigt Figur 18 das von einem Primärschaden W geschädigte Hüllrohr 1, in dessen oberen Teil ein Keim V angebracht ist. Der Wasserstoff, der sich im Hüllrohr-Innenraum aus dem durch den Primärschaden W einströmenden Wasser auf die Weise bildet, die anhand der Figur 7 beschrieben ist, führt nunmehr aber dazu, daß der Keim V aktiviert wird und zum sekundärschaden V' führt (Figur 19), bevor sich aus anderen zufällig vorhandenen Keimen ausgedehntere Sekundärschäden entwickeln können. Zwar steigt der Wasserspiegel im Hüllrohr-Innenraum nun mehr auf eine Höhe, die sich aus dem Gleichgewicht zwischen dem über W eindringenden Wasser und dem über V' austretenden Wasserstoff/Kühlwasser-Dampf-Gemisch ergibt, jedoch trocknet die Innenatmosphäre des Kühlmittels wegen des ständig über W nachgelieferten Wassers nicht aus, so daß sich nun mehr praktisch an der ganzen Innenfläche des Kühlmittels eine schützende Oxidationsschicht Ox" bildet und die gefährliche Hydrierung des Hüllenmaterials unterbleibt.

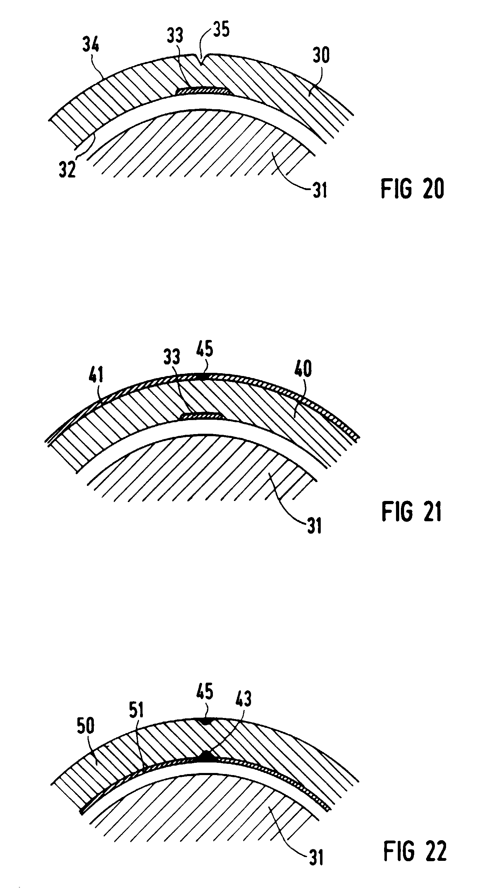

In Figur 20 ist ein Ausschnitt aus einem mit einem Urandioxid-Pellet 31 gefüllten Hüllrohr 30 gezeigt, das aus einem homogenen Material, zum Beispiel Zircaloy, besteht. Auf der Innenfläche 32 dieses Hüllrohrs ist zum Beispiel durch Bedampfung oder Sputtern mit einem geeigneten Fremdstoff ein Bereich 33 erzeugt. Hier kann Kühlmittel (Wasser) bzw. Reaktionsstoffe (Wasserstoff), die aus dem Kühlmittel nach dem Eintritt in das Innere des Hüllrohres durch Umsetzungen mit dem Hüllrohr und/oder vor allem durch Umsetzung mit dem Brennstoff entstehen, mit dem Material des Hüllrohres reagieren oder zumindest in das Hüllrohrmaterial eindringen. Wird der durch Oxidation aus dem eingedrungenen Wasser freigesetzte Reaktionswasserstoff als Ursache der Sekundärschäden angesehen, so ist zum Beispiel Nickel ein geeigneter Fremdstoff, da er die Aufnahme von Wasserstoff fördert, also wie ein Ventil für Wasserstoff wirkt, der an diesen Stellen in Zirkonium, Zirkoniumlegierungen und deren Oxidschichten leicht eindringen kann.

Der Bereich 33 wird daher zum Kanal für den Eintritt des Wasserstoffs in das Hüllrohrmaterial, also zum vom Inneren des Hüllrohres her aktivierbaren Keim.

Auf der gegenüberliegenden Außenfläche 34 des Hüllrohres können zufällig sich dort befindliche Unregelmäßigkeiten in der Materialstruktur (zum Beispiel eine kleine Kerbe 35) dazu führen, daß der durch den Bereich 33 eindiffundierte Wasserstoff dort gesammelt wird, wo dann die erwähnten Spannungen und eine Versprödung des Materials und schließlich ein durch den Keim provoziertes Loch auftritt. Dieser Vorgang spielt sich natürlich erst ab, nachdem Kühlmittel wegen eines Primärschadens in das Hüllrohr eingedrungen ist; die normale Funktionsfähigkeit des Brennstabs ist dadurch nicht gestört, solange das Hüllrohr keinen Primärschaden aufweist.

Es ist dabei vorteilhaft, nicht nur den Bereich 33 als einen von innen aktivierbaren Keim vorzusehen, der dann an einer zufälligen Unregelmäßigkeit der Hüllrohr-Außenfläche zu einem dieser Unregelmäßigkeit entsprechenden Loch führt, sondern vielmehr diesen Bereich 33 mit einem entsprechenden Bereich auf der Außenseite des Hüllrohres, der beim Reaktorbetrieb zu Spannungen im Material des Hüllrohres führt, zu kombinieren. Man kann zum Beispiel eine vorsätzlich angebrachte Strukturänderung im Material oder eine praktisch punktförmige oder wenigstens kleinflächige Kerbe 35 an der dem Bereich 33 gegenüberliegenden Stelle der Hüllrohr-Außenfläche anbringen.

Wie die Figuren 10 bis 15 nahelegen, entstehen die großflächigen Sekundärschäden, indem zum Beispiel ausgedehnte Kerben oder Kratzer an der Hüllrohr-Außenfläche als ein Keim wirken, der von der Innenseite des Hüllrohrs her durch das Kühlmittel bzw. die aus dem Kühlmittel entstehenden Reaktionsstoffe aktivierbar ist. Um die gewünschte Perforation zu provozieren, kann daher ein entsprechender Keim ausreichen, der auch nur an der Außenfläche oder in der Außenfläche des Hüllrohrs angebracht ist. Da jedoch zum Beispiel eine vorsätzlich angebrachte Kerbe, eine Strukturänderung oder ein ähnlicher Keim wirksamer sein muß als zufällige Kratzer oder andere, unbewußte Störungen der Außenfläche, kann es erforderlich werden, derartige, nur auf der Außenfläche angeordnete Keime derart stark auszubilden, daß dadurch die Integrität des Hüllrohres bereits gefährdet wird, ohne daß ein Primärschaden vorliegt.

Aus diesem Grund kann es vorteilhafter sein, wie in Figur 21 anhand eines Hüllrohres aus einer Zirkaloy-Matrix und einer Außen-Umkleidung aus einer Zirkoniumlegierung (sogenanntes "Duplex"-Hüllrohr) gezeigt ist, an der Außenfläche des Hüllrohres einen Bereich 45 mit einer anderen Strukturänderung anzubringen.

Zirkonium, Zirkoniumlegierungen wie Zirkaloy und andere Hüllrohrmaterialien liegen meist verhältnismäßig homogen in der bei niedriger Temperatur stabilen Alpha-Struktur vor, da die Hüllrohre im Verlauf ihrer Fertigung einer entsprechenden Glühung und langsamer Abkühlung unterworfen werden. Es ist nun möglich, durch Erhitzung eines entsprechend gewählten Bereichs (zum Beispiel mittels eines Laser-Strahls) das Material in eine bei höheren Temperaturen stabile Struktur, zum Beispiel eine Beta-Struktur, zu überführen, aus der sich nach einem Abschrecken eine gegenüber dem restlichen Hüllrohr-Material veränderte morphologische Struktur bildet. Im Beispiel der Figur 21 ist also an der Außenfläche ein Bereich mit einem "Beta-Abschreck-Gefüge", also eine durch Abschrecken der lokal erzeugten Beta-Phase gebildete Struktur, in dem Hüllrohrmaterial erzeugt, das im übrigen in der Alpha-Struktur vorliegt.

Damit ist auf der Außenseite auf eine materialschonende Weise ein Keim geschaffen, der durch einen entsprechend Figur 20 ausgebildeten Bereich 33 auf der Innenfläche des Hüllrohres ergänzt werden kann. Die Strukturänderungen im Bereich 45 wirken ebenfalls als Sammelstellen für den eingedrungenen Reaktionswasserstoff und Ausgangspunkt von Spannungen und Spannungsrissen, wie in den Figuren 10 bis 15 anhand von Kerben oder Kratzern beschrieben ist. Diese Risse breiten sich jedoch nur soweit aus, wie das umgebende Material durch übermäßige Hydrierung versprödet oder auf ähnliche Weise geschädigt ist.

Ein derartiger, als Korrosionskeim wirkender Sammelpunkt für Oxidationswasserstoff und Ausgangspunkt von Spannungen kann natürlich auch auf der Innenseite durch eine entsprechende Strukturänderung erzeugt werden. Figur 22 zeigt dies am Beispiel eines Zirkaloy-Hüllrohres mit einem Zirkonium-Liner, wobei der Bereich 43 an der Innenseite des Hüllrohres durch Einspiegeln eines Laserstrahles erzeugt ist. Dadurch ist es möglich, praktisch punktweise soviel Energie einzubringen, daß die Strukturänderung sogar den Liner 51 durchdringt und in die Matrix 50 hineinragt. Die Grenzfläche zwischen der Matrix, die die eine Fläche des Hüllrohres bildet, und dem auf die Matrix aufgebrachten Material, das eine dünne Schicht auf der anderen Fläche des Rohres bildet, enthält daher einen Bereich, der für Reaktionsstoffe, die nach dem Eintritt des Kühlmittels im Hüllrohr-Innenraum gebildet werden, durchlässiger ist als die restliche Grenzfläche zwischen diesen unterschiedlichen Materialien.

Derartige Strukturen haben den Vorteil, daß sie die mechanische Integrität des Hüllrohrs nicht verletzen und auch im Normalbetrieb die Korrosionsbeständigkeit praktisch nicht beeinträchtigen.

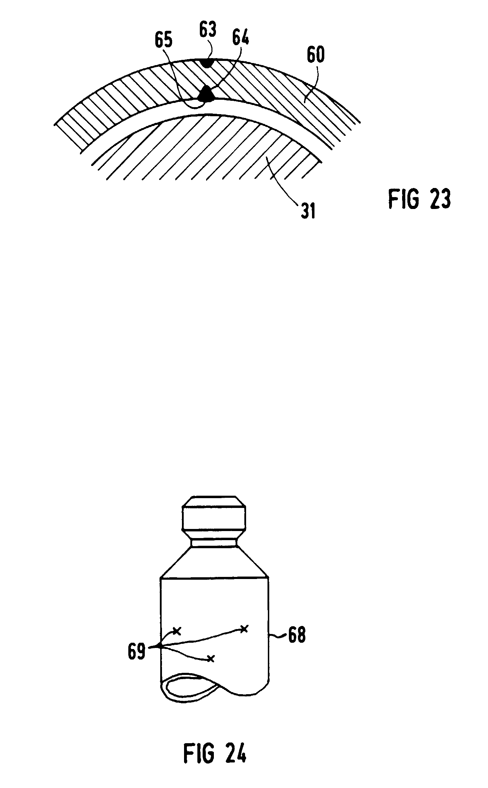

Solche und ähnliche Möglichkeiten zur Bildung der erfindungsgemäßen Keime können auch miteinander kombiniert werden. So zeigt Figur 23 zum Beispiel ein Hüllrohr aus einer homogenen Zirkoniumlegierung mit Alpha-Struktur, bei dem auf der Außenseite und einer gegenüberliegenden Stelle auf der Innenseite des Hüllrohrs jeweils ein Bereich 63 und 64 mit einem geänderten Gefüge vorgesehen ist, wobei über dem auf der Hüllrohr-Innenseite liegenden Bereich 64 noch ein dünner Belag 65 aus Nickel auf die Hüllrohr-Innenseite aufgebracht ist.

Figur 24 zeigt eine schematische Seitenansicht des oberen Brennstab-Endes 68, auf dem in verhältnismäßig geringem Abstand unterhalb des Brennstab-Endes mehrere kreuzförmige Keime 69 verteilt sind.

Die Länge solcher auf der Innenfläche und/oder Außenfläche angebrachten kreuz- oder strichförmigen Keime ist vorteilhaft sehr klein, zum Beispiel unter 2 mm. Allgemein wird man die Geometrie des Keimes, die ja auch die Form des dadurch provozierten Loches bestimmt, so wählen, daß dadurch keine Löcher entstehen, die so groß oder so ungünstig sind, daß sie die weitere Funktionsfähigkeit des Brennstabes nachhaltig stören und eine schnelle Auswechslung erforderlich machen. Vielmehr soll der Keim nach seiner Aktivierung zu einem möglichst wenig störenden Loch führen. Vorteilhaft ist er nahe am oberen Brennstabende angebracht, insbesondere im oberen Fünftel des Brennstabes. Dabei ist ein gewisser Mindestabstand von Schweißnähten oder anderen Schwachstellen des Brennstabes zweckmäßig.

Bei Siedewasserreaktoren werden die Absorber zur Steuerung eines häufig wechselnden Leistungsbedarfs einer häufigen Bewegung unterworfen werden. Diese häufigen Leistungsänderungen führen zu starken thermischen und mechanischen Belastungen des Hüllrohrs. Die Erfindung ist daher zunächst für Brennstäbe von Siedewasser-Reaktoren besonders wichtig, um schwere Sekundärschaden zuverlässig zu vermeiden. Dabei kommt der richten Wahl für das Material der Hüllrohr-Innenwand besondere Bedeutung zu.

Figur 2 zeigt, daß das Material des Liners nicht nur im Hinblick auf Duktilität und Korrosionsbeständigkeit ausgewählt werden darf. Gerade Hüllrohre mit Reinzirkonium-Linern zeigten die längsten Risse. Entscheidend muß eine hohe Beständigkeit gegen Wasserstoff hinzukommen.

Durch die Verwendung eines geeigneten Liners jedoch werden die Primärschäden weitgehend vermieden. Primärschäden, die außen am Hüllrohr erzeugt werden und zu Löchern führen, die von außen nach innen durch das Hüllrohr wachsen, werden allerdings auch durch diesen Liner nicht beeinflußt. Hier bietet das erfindungsgemäße "automatische Wasserstoff-Sicherheitsventil" zusätzliche Sicherheit vor großflächigen Sekundärschäden.

Der gemäß der Erfindung vorgesehene Keim für die kontrollierte Bildung eines kleinflächigen Sekundärschadens beeinträchtigt die Funktionsfähigkeit eines Brennstabs überhaupt nicht, solange noch kein Primärdefekt aufgetreten ist. Nach einem Primärschaden, der in ungünstigen Fällen innerhalb kurzer Zeit zu einem schwerwiegenden Sekundärschaden führen würde, ist eine Anfälligkeit für Sekundärschäden kontrolliert und führt nur zu einem kleinflächigen Schaden, der eine rasche Auswechslung des Brennstabes noch nicht erfordert, sondern gestattet, ihn unter Umständen noch längere Zeit im Reaktorkern zu lassen.

Darüber hinaus kann die Erfindung aber auch bei anderen Hüllrohren, z. B. für Brennstäbe von Druckwasserreaktoren angewendet werden.

## Patentansprüche

1. Brennstab für ein beim Betrieb eines Kernreaktors durch ein Kühlmittel, insbesondere Leichtwasser, gekühltes Brennelement, mit einem verschlossenen Hüllrohr (1) mit
a) einem kühlmittelfreien, mindestens Kernbrennstoff (5) enthaltenden Innenraum,
b) einer Innenfläche aus einem beim Reaktorbetrieb gegenüber den Bedingungen im Innenraum korrosionsbeständigen Material,
c) einer Außenfläche aus einem beim Reaktorbetrieb gegenüber den Bedingungen im Kühlmittel korrosionsbeständigen Material,
**gekennzeichnet** durch
d) einen Keim (V) zur Bildung eines das Hüllrohr durchsetzenden Loches (W), wobei der Keim bei unbeschädigtem Hüllrohr und den Betriebsbedingungen des Kernreaktors von außen durch das Kühlmittel und von innen durch die Bedingungen im Innenraum nicht aktivierbar ist, aber aktivierbar ist, sobald durch einen Schaden (W) am Hüllrohr Kühlmittel in das Innere des Hüllrohrs eingetreten ist.

2. Brennstab nach Anspruch 1,
**dadurch gekennzeichnet,** daß der Keim (V) an oder im Hüllrohr oberhalb eines Bereichs angebracht ist, in dem Untersuchungen von geschädigten Brennstäben den überwiegenden Teil der Schäden zeigen.

3. Brennstab nach Anspruch 2,
**dadurch gekennzeichnet,** daß der Keim (V) nahe des oberen oder unteren Brennstabendes, insbesondere im oberen oder unteren Fünftel des Brennstabs, angeordnet ist.

4. Brennstab nach Anspruch 1,
**dadurch gekennzeichnet,** daß der Keim (V) in einem Teil (C) des Brennstabs angeordnet ist, in dem der Brennstab keinen Brennstoff enthält.

5. Brennstab nach einem der Ansprüche 1 bis 4,
**dadurch gekennzeichnet,** daß am oberen und unteren Ende jeweils mindestens ein derartiger Keim (V) angebracht ist.

6. Brennstab nach einem der Ansprüche 1 bis 5,
**dadurch gekennzeichnet,** daß der Keim (69) eine geometrische Form aufweist, die im Reaktorbetrieb nach seiner Aktivierung zu einem die Funktionsfähigkeit des Brennstabs im Reaktorkern möglichst wenig beeinträchtigenden Loch führt.

7. Brennstab nach Anspruch 6,
**dadurch gekennzeichnet,** daß der Keim (69) nahezu punktförmig oder kleinflächig ist.

8. Brennstab nach Anspruch 7,
**dadurch gekennzeichnet,** daß die längste Ausdehnung des Keimes (69) unter etwa 2 mm liegt.

9. Brennstab nach Anspruch 8,
**dadurch gekennzeichnet,** daß der Keim (69) mit einem strich- oder kreuzförmigen Querschnitt auf der inneren und/oder äußeren Oberfläche der Hülle angeordnet ist.

10. Brennstab nach einem der Ansprüche 1 bis 9,
**dadurch gekennzeichnet,** daß der Keim (33, 43, 63) einen Bereich mit einer gegenüber der Struktur des Materials auf der Innenfläche des Hüllrohres veränderten Struktur enthält, der auf der Innenseite des Hüllrohrs angeordnet ist.

11. Brennstab nach Anspruch 10,
**gekennzeichnet** durch eine Alpha-Struktur des Materials auf der Innenfläche des Hüllrohrs und einer Beta-Abschreck-Struktur des Materials in dem auf der Innenseite angeordneten Bereich des Keimes.

12. Brennstab nach einem der Ansprüche 1 bis 11,
**dadurch gekennzeichnet,** daß der Keim (33) einen Bereich enthält, in dem ein Material auf die Innenseite des Hüllrohrs angebracht ist, das das Hüllrohr aufnahmefähig oder reaktionsfähig für das Kühlmittel oder Reaktionsstoffe, die nach dem Eintritt des Kühlmittels in den Innenraum des Hüllrohrs auftreten, macht.

13. Brennstab nach einem der Ansprüche 1 bis 12,
**dadurch gekennzeichnet,** daß der Keim (35) einen Bereich auf der Außenfläche des Hüllrohrs enthält, der beim Reaktorbetrieb Spannungen im Material des Hüllrohrs erzeugt.

14. Brennstab nach einem der Ansprüche 1 bis 13,
**dadurch gekennzeichnet,** daß der Keim (45) einen Bereich auf der Außenfläche des Hüllrohrs enthält, der durch Reaktionsstoffe, die nach dem Eintritt von Kühlmittel in den Innenraum des Hüllrohrs auftreten und durch die Hüllrohrwand diffundieren, versprödet wird.

15. Brennstab nach Anspruch 13 oder 14,
**gekennzeichnet** durch eine Alpha-Struktur des Materials auf der Außenfläche des Hüllrohrs und eine Beta-Abschreck-Struktur des Materials in dem auf der Außenseite des Hüllrohrs angeordneten Bereich.

16. Brennstab nach einem der Ansprüche 10 bis 12 in Kombination mit einem der Ansprüche 13 bis 15,
**dadurch gekennzeichnet,** daß der Bereich (33, 43) auf der Innenfläche des Hüllrohrs und der Bereich (35, 45) auf der Außenfläche des Hüllrohrs einander ungefähr gegenüber an der Hüllrohrwand liegen.

17. Brennstab für ein Siedewasser-Brennelement nach einem der Ansprüche 1 bis 15,
**dadurch gekennzeichnet,** daß die Innenfläche (23) aus einem metallurgisch aufgebrachten Metall, das auch in Anwesenheit von Wasserstoff möglichst wenig veränderlich ist, und die Außenfläche (22) aus einem im Siedewasser korrosionsbeständigen Material, besteht und der Keim (26) von gasförmigem Wasserstoff aktivierbar ist.

18. Brennstab nach Anspruch 17,
**dadurch gekennzeichnet,** daß die Hüllrohre aus Zircaloy und das metallurgisch aufgebrachte Metall im wesentlichen aus einer Zirkonium-Eisen-Legierung besteht.

19. Brennstab nach einem der Ansprüche 1 bis 16,
**dadurch gekennzeichnet,** daß die Außenfläche (41, 50) des Hüllrohrs aus einem gegenüber dem Kühlmittel beständigen Material und die Innenfläche (40, 51) des Hüllrohrs aus einem anderen Material gefertigt ist.

20. Brennstab nach Anspruch 19,
**dadurch gekennzeichnet,** daß die Innenfläche (51) aus einem duktileren Material als die Außenfläche (50) ist.

21. Brennstab nach Anspruch 19 oder 20,
**dadurch gekennzeichnet,** daß der Keim einen Bereich (43) an der Grenzfläche zwischen dem Material der Außenfläche und dem Material der Innenfläche enthält, der für Reaktionsstoffe, die bei einem Eintritt des Kühlmittels in den Innenraum des Hüllrohrs entstehen, durchlässiger oder aufnahmefähiger ist als die Grenzfläche zwischen den beiden Materialien.

22. Brennstab nach einem der Ansprüche 1 bis 21,
**dadurch gekennzeichnet,** daß der Innenraum des Hüllrohrs einen oxidationsfähigen Brennstoff (5) enthält, die Außenfläche (41) des Hüllrohrs von einem gegen die Korrosion durch Wasser als Kühlmittel beständigen Material und die Innenschicht (40) aus einem gegen Belastungen, die beim Reaktorbetrieb an der Innenfläche entstehen, beständigen Material gebildet wird und daß der Keim einen an oder in der Innenfläche angeordneten Bereich (33) aufweist, der eine hohe Aufnahmefähigkeit für Wasserstoff aufweist.

23. Brennstab nach Anspruch 22,
**dadurch gekennzeichnet,** daß das Hüllrohr eine Wand mit einer sich mindestens über mehr als die Hälfte der Wanddicke erstreckenden Trägerschicht (50) aus einer Zirkoniumlegierung, insbesondere Zirkaloy, aufweist.

24. Brennstab nach Anspruch 23,
**dadurch gekennzeichnet,** daß auf der Trägerschicht (50) eine Schicht aus einer anderen Zirkoniumlegierung, insbesondere einer gegenüber der Legierung der Trägerschicht reineren Zirkoniumlegierung, aufgebracht ist.

25. Brennstab nach Anspruch 24,
**dadurch gekennzeichnet,** daß das auf die Trägerschicht aufgebrachte Material (51) zumindest außerhalb des Keimes die Innenfläche des Hüllrohrs bildet.

26. Brennstab nach einem der Ansprüche 22 bis 25,
**dadurch gekennzeichnet,** daß der Keim (43, 45, 63, 65) auf der Innenseite und/oder der Außenseite des Hüllrohrs einen Bereich mit einem Beta-Abschreck-Gefüge enthält.

27. Brennstab nach Anspruch 26,
**dadurch gekennzeichnet,** daß das Hüllrohr auf beiden Seiten seiner Wand jeweils einen Bereich mit dem Beta-Abschreck-Gefüge enthält und daß sich die beiden Bereiche ungefähr gegenüber liegen.

28. Brennstab nach einem der Ansprüche 22 bis 27,
**dadurch gekennzeichnet,** daß der auf der Innenfläche angeordnete Bereich von einem Material mit einer hohen Speicherfähigkeit für Wasserstoff gebildet wird, auf das ein Material mit einer hohen Durchlässigkeit für Wasserstoff aufgebracht ist.

## Claims

1. Fuel rod for a fuel element which is cooled by a coolant, in particular light water, during the operation of a nuclear reactor and which has a sealed cladding tube (1) comprising
a) a coolant-free interior containing at least nuclear fuel (5),
b) an internal surface composed of a material which is corrosion-resistant to the conditions in the interior during the operation of the reactor,
c) an external surface composed of a material which is corrosion-resistant to the conditions in the coolant during the operation of the reactor,
characterized by
d) a nucleus (V) for forming a hole (W) which penetrates the cladding tube, the nucleus not being activable from the outside by the coolant and from the inside by the conditions in the interior in the case of an undamaged cladding tube and of the operating conditions of the nuclear reactor, but being activable as soon as coolant has entered the interior of the cladding tube through damage (W) to the latter.

2. Fuel rod according to Claim 1, characterized in that the nucleus (V) is provided on or in the cladding tube above a region in which studies of damaged fuel rods reveal most of the damage.

3. Fuel rod according to Claim 2, characterized in that the nucleus (V) is disposed near the upper or lower fuel-rod end, in particular in the upper or lower fifth of the fuel rod.

4. Fuel rod according to Claim 1, characterized in that the nucleus (V) is disposed in a section (C) of the fuel rod in which the fuel rod does not contain any fuel.

5. Fuel rod according to any of Claims 1 to 4, characterized in that at least one such nucleus (V) is provided in each case at the upper and lower end.

6. Fuel rod according to any of Claims 1 to 5, characterized in that the nucleus (69) has a geometrical shape which, after its activation, results in a hole which impairs the serviceability of the fuel rod in the reactor core as little as possible during the operation of the reactor.

7. Fuel rod according to Claim 6, characterized in that the nucleus (69) is virtually punctiform or of small area.

8. Fuel rod according to Claim 7, characterized in that the longest extent of the nucleus (69) is less than approximately 2 mm.

9. Fuel rod according to Claim 8, characterized in that the nucleus having a line-type or cross-type cross-section is disposed on the internal and/or external surface of the cladding.

10. Fuel rod according to any of Claims 1 to 9, characterized in that the nucleus (33, 43, 63) contains a region having a structure which is altered compared with the structure of the material on the internal surface of the cladding tube, which region is disposed on the inside of the cladding tube.

11. Fuel rod according to Claim 10, characterized by an α-structure of the material on the internal surface of the cladding tube and a quenched β-structure of the material in the region of the nucleus disposed on the inside.

12. Fuel rod according to any of Claims 1 to 11, characterized in that the nucleus (33) contains a region in which a material is applied to the inside of the cladding tube, which material makes the cladding tube capable of absorbing or reacting with the coolant or substances due to reaction which occur after the coolant has entered the interior of the cladding tube.

13. Fuel rod according to any of Claims 1 to 12, characterized in that the nucleus (35) contains a region on the external surface of the cladding tube which generates stresses in the material of the cladding tube during the operation of the reactor.

14. Fuel rod according to any of Claims 1 to 13, characterized in that the nucleus (45) contains a region on the external surface of the cladding tube which is embrittled by substances due to reaction which occur after the coolant has entered the interior of the cladding tube and diffuse through the cladding-tube wall.

15. Fuel rod according to Claim 13 or 14, characterized by an α-structure of the material on the external surface of the cladding tube and a quenched β-structure of the material in the region disposed on the outside of the cladding tube.

16. Fuel rod according to any of Claims 10 to 12 in combination with any of Claims 13 to 15, characterized in that the region (33, 43) on the internal surface of the cladding tube and the region (35, 45) on the external surface of the cladding tube are situated approximately opposite one another on the cladding-tube wall.

17. Fuel rod for a boiling-water fuel element according to one of Claims 1 to 15, characterized in that the internal surface (23) is composed of a metallurgically deposited metal which is as little alterable as possible even in the presence of hydrogen and the external surface (22) is composed of a material which is corrosion-resistant in boiling water, and the nucleus (26) is activable by gaseous hydrogen.

18. Fuel rod according to Claim 17, characterized in that the cladding tubes are composed of zircaloy and the metallurgically deposited metal is essentially composed of a zirconium/iron alloy.

19. Fuel rod according to any of Claims 1 to 16, characterized in that the external surface (41, 50) of the cladding tube is made of a material which is resistant to the coolant and the internal surface (40, 51) of the cladding tube is made of another material.

20. Fuel rod according to Claim 19, characterized in that the internal surface (51) is composed of a more ductile material than the external surface (50).

21. Fuel rod according to Claim 19 or 20, characterized in that the nucleus contains a region (43) at the interface between the material of the external surface and the material of the internal surface, which region is more permeable to or more capable of absorbing substances due to reaction which are produced when the coolant enters the interior of the cladding tube than the interface between the two materials.

22. Fuel rod according to any of Claims 1 to 21, characterized in that the interior of the cladding tube contains an oxidizable fuel (5), the external surface (41) of the cladding tube is formed from a material which is resistant to corrosion by water as coolant and the internal layer (40) is formed from a material which is resistant to loadings which are produced at the internal surface during the operation of the reactor, and in that the nucleus has a region (33) which is disposed on or in the internal surface and which has a high absorption capability for hydrogen.

23. Fuel rod according to Claim 22, characterized in that the cladding tube has a wall having a carrier layer (50), composed of a zirconium alloy, in particular zircaloy, extending at least over more than half the wall thickness.

24. Fuel rod according to Claim 23, characterized in that a layer composed of another zirconium alloy, in particular a purer zirconium alloy than the alloy of the carrier layer, is applied to the carrier layer (50).

25. Fuel rod according to Claim 24, characterized in that the material (51) applied to the carrier layer forms the internal surface of the cladding tube at least outside the nucleus.

26. Fuel rod according to any of Claims 22 to 25, characterized in that the nucleus (43, 45, 63, 65) on the inside and/or the outside of the cladding tube contains a region having a quenched β-microstructure.

27. Fuel rod according to Claim 26, characterized in that the cladding tube contains in each case a region having the quenched β-microstructure on both sides of its wall and in that the two regions are situated approximately opposite one another.

28. Fuel rod according to any of Claims 22 to 27, characterized in that the region disposed on the internal surface is formed from a material having a high storage capacity for hydrogen, to which material a material having a high permeability to hydrogen is applied.

## Revendications

1. Crayon combustible pour un assemblage combustible refroidi lors du fonctionnement d'un réacteur nucléaire par un fluide de refroidissement, notamment de l'eau ordinaire, comportant un tube (1) de gainage fermé comportant
a) une chambre intérieure exempte de fluide de refroidissement et contenant au moins du combustible nucléaire (5),
b) une surface intérieure en un matériau résistant à la corrosion lors du fonctionnement du réacteur dans les conditions régnant dans la chambre intérieure,
c) une surface extérieure en un matériau résistant à la corrosion lors du fonctionnement du réacteur dans les conditions régnant dans le fluide de refroidissement,
caractérisé par
d) un germe (V) pour la formation d'un trou (W) traversant le tube de guidage, le germe ne pouvant pas être activé lorsque le tube de gainage n'est pas endommagé et dans les conditions de fonctionnement du réacteur nucléaire à l'extérieur par le fluide de refroidissement et à l'intérieur par les conditions régnant dans la chambre intérieure mais pouvant être activé dès qu'à cause d'un dommage (W) du tube de gainage, du fluide de refroidissement a pénétré à l'intérieur du tube de gainage.

2. Crayon combustible suivant la revendication 1,
caractérisé en ce que le germe (V) est prévu sur ou dans le tube de gainage au dessus d'une zone dans laquelle des examens de crayons combustibles endommagés montrent la majeure partie des dommages.

3. Crayon combustible suivant la revendication 2,
caractérisé en ce que le germe (V) est prévu à proximité de l'extrémité supérieure ou inférieure du crayon combustible, notamment dans le cinquième supérieur ou inférieur du crayon combustible.

4. Crayon combustible suivant la revendication 1,
caractérisé en ce que le germe (V) est prévu dans une partie (C) du crayon combustible, où le crayon combustible ne contient pas de combustible.

5. Crayon combustible suivant l'une des revendications 1 à 4,
caractérisé en ce qu'au moins un germe de ce genre (V) est prévu à l'extrémité supérieure et à l'extrémité inférieure.

6. Crayon combustible suivant l'une des revendications 1 à 5,
caractérisé en ce que le germe (69) a une forme géométrique, qui provoque pendant le fonctionnement du réacteur après son activation un trou portant le moins possible atteinte à la capacité de fonctionner du crayon combustible dans le coeur du réacteur.

7. Crayon combustible suivant la revendication 6,
caractérisé en ce que le germe (69) est pratiquement ponctuel ou de petite surface.

8. Crayon combustible suivant la revendication 7,
caractérisé en ce que la dimension la plus grande du germe (69) est inférieure à environ 2 mm.

9. Crayon combustible suivant la revendication 8,
caractérisé en ce que le germe (69) est disposé avec une section transversale en forme de trait ou de croix sur la surface intérieure et/ou extérieure de l'enveloppe.

10. Crayon combustible suivant l'une des revendications 1 à 9,
caractérisé en ce que le germe (33,43,63) comporte une zone ayant une structure modifiée par rapport à la structure du matériau sur la surface intérieure du tube de gainage et qui est prévue sur la face intérieure du tube de gainage.

11. Crayon combustible suivant la revendication 10,
caractérisé par une structure alpha du matériau sur la surface intérieure du tube de gainage et par une structure de trempe bêta du matériau dans la zone du germe prévue sur la face intérieure.

12. Crayon combustible suivant l'une des revendications 1 à 11,
caractérisé en ce que le germe (33) comprend une zone, dans laquelle est déposée sur la face intérieure du tube de gainage un matériau qui rend le tube de gainage absorbant ou réactif pour le fluide de refroidissement ou des produits de réaction, qui apparaissent après l'entrée du fluide de refroidissement dans la chambre intérieure du tube de gainage.

13. Crayon combustible suivant l'une des revendications 1 à 12,
caractérisé en ce que le germe (35) comprend une zone sur la surface extérieure du tube de gainage, qui produit pendant le fonctionnement du réacteur des tensions dans le matériau du tube de gainage.

14. Crayon combustible suivant l'une des revendications 1 à 13,
caractérisé en ce que le germe (45) comprend une zone sur la surface extérieure du tube de gainage, qui est fragilisée par des produits de réaction qui apparaissent après l'entrée du fluide de refroidissement dans la chambre intérieure du tube de gainage et qui diffusent par la paroi du tube de gainage.

15. Crayon combustible suivant la revendication 13 ou 14,
caractérisé par une structure alpha du matériau sur la surface extérieure du tube de gainage et par une structure de trempe bêta du matériau dans la zone de la face extérieure du tube de gainage.

16. Crayon combustible suivant l'une des revendications 10 à 12, en combinaison avec l'une des revendications 13 à 15,
caractérisé en ce que la zone (33,43) sur la surface intérieure du tube de gainage et la zone (35,45) sur la surface extérieurs du tube de gainage se trouvent à peu près l'une en face de l'autre sur la paroi du tube de gainage.

17. Crayon combustible pour un assemblage combustible à eau bouillante suivant l'une des revendications 1 à 15,
caractérisé en ce que la surface intérieure (23) est en un métal déposé métallurgiquement, qui varie le moins possible en présence d'hydrogène et la surface extérieure (22) est en un matériau résistant à la corrosion dans l'eau bouillante et le germe (26) peut être activé par de l'hydrogène gazeux.

18. Crayon combustible suivant la revendication 17,
caractérisé en ce que les tubes de gainage sont en zircaloy et le métal déposé métallurgiquement est essentiellement en un alliage de zirconium et de fer.

19. Crayon combustible suivant l'une des revendications 1 à 16,
caractérisé en ce que la surface extérieure (41,50) du tube de gainage est en un matériau résistant au fluide de refroidissement et la surface intérieure (40,51) du tube de gainage est fabriquée en un autre matériau.

20. Crayon combustible suivant la revendication 19,
caractérisé en ce que la surface intérieure (51) est en un matériau plus ductile que la surface extérieure (50).

21. Crayon combustible suivant la revendication 19 ou 20,
caractérisé en ce que le germe comprend une zone (43) à la surface limite entre le matériau de la surface extérieure et le matériau de la surface intérieure, qui est plus perméable ou plus absorbante que la surface limite entre les deux matériaux, pour des produits de réaction, qui apparaissent lors de l'entrée du fluide de refroidissement dans la chambre intérieure du tube de gainage.

22. Crayon combustible suivant l'une des revendications 1 à 21,
caractérisé en ce que la chambre intérieure du tube de gainage contient un combustible (5) oxydant, la surface extérieure (41) du tube de gainage est formée d'un matériau résistant à la corrosion par de l'eau comme fluide de refroidissement et la couche intérieure (40) est formée d'un matériau résistant aux contraintes apparaissant sur la surface intérieure lors du fonctionnement du réacteur et le germe comporte une zone (33), sur ou dans la surface intérieure, qui a un grand pouvoir absorbant pour l'hydrogène.

23. Crayon combustible suivant la revendication 22,
caractérisé en ce que le tube de gainage comporte une paroi ayant une couche (50) de support s'étendant au moins sur plus de la moitié de l'épaisseur de la paroi et en un alliage de zirconium, notamment en zircaloy.

24. Crayon combustible suivant la revendication 23,
caractérisé en ce qu'une couche en un autre alliage de zirconium, notamment en un alliage de zirconium plus pur que l'alliage de la couche de support est déposée sur la couche (50) de support.

25. Crayon combustible suivant la revendication 24,
caractérisé en ce que le matériau (51) déposé sur la couche de support forme, au moins à l'extérieur du germe, la surface intérieure du tube de gainage.

26. Crayon combustible suivant l'une des revendications 22 à 25,
caractérisé en ce que le germe (43,45,63,65) comprend du côté intérieur et /ou du côté extérieur du tube de gainage une zone ayant une texture de trempe bêta.

27. Crayon combustible suivant la revendication 26,
caractérisé en ce que le tube de gainage comprend sur chacun des deux côtés de sa paroi une zone de texture de trempe bêta et les deux zones sont à-peu-près en face l'une de l'autre.

28. Crayon combustible suivant l'une des revendications 22 à 27,
caractérisé en ce que la zone prévue sur la surface intérieure est formée d'un matériau ayant un grand pouvoir de retenue de l'hydrogène, sur laquelle un matériau ayant une grande perméabilité à l'hydrogène est déposé.
